Europäisches Patentamt

European Patent Office

Office européen des brevets

(19)

(11) Veröffentlichungsnummer: **0 239 713**

**A1**

(12) **EUROPÄISCHE PATENTANMELDUNG**

(21) Anmeldenummer: **86890091.1**

(22) Anmeldetag: **02.04.86**

(51) Int. Cl.⁴: **B01D 53/04**

(43) Veröffentlichungstag der Anmeldung:
**07.10.87 Patentblatt 87/41**

(84) Benannte Vertragsstaaten:
**AT BE CH DE FR GB IT LI LU NL SE**

(71) Anmelder: **VOEST-ALPINE Aktiengesellschaft
Friedrichstrasse 4
A-1011 Wien(AT)**

(72) Erfinder: **Buttinger, Christian
Wienerstrasse 214a
A-4020 Linz(AT)**

(74) Vertreter: **Haffner, Thomas M., Dr. et al
Patentanwaltskanzlei Dipl.-Ing. Adolf
Kretschmer Dr. Thomas M. Haffner
Schottengasse 3a
A-1014 Wien(AT)**

(54) **Verfahren zum Reinigen von Gasen sowie Vorrichtung zur Durchführung dieses Verfahrens.**

(57) Bei einem Verfahren zum Reinigen von Gasen, insbesondere zum Abtrennen von Sauerstoff aus Luft, unter Verwendung von Druckwechseladsorbern wird das zu reinigende Gas unter Druck mit selektiv adsorbierenden Materialien in Kontakt gebracht und die adsorbierten Gase werden zur Regeneration der adsorbierenden Materialien durch Entspannen und gegebenenfalls Anwendung von Saugdruck die desorbiert. Zur Erzielung einer annähernd kontinuierlichen Betriebsweise wird eine Mehrzahl von Druckwechseladsorbern zyklisch mit zu reinigendem Gas beaufschlagt, zur Desorption entspannt, gegebenenfalls zur weiteren Desorbierung unter Unterdruck gesetzt und dem Druckaufbau auf Beladedruck unterzogen. Die Zeiten für die Beladung, das Entspannen und gegebenenfalls die Anwendung von Saugdruck zur Desorption für das Regenerieren des adsorbierenden Materials und einen neuerlichen Druckaufbau auf den Beladedruck werden für die zyklische Durchführung des Verfahrens aneinander angeglichen, insbesondere gleich lang gewählt.

FIG. 2

EP 0 239 713 A1

## Verfahren zum Reinigen von Gasen sowie Vorrichtung zur Durchführung dieses Verfahrens

Die Erfindung bezieht sich auf ein Verfahren zum Reinigen von Gasen, insbesondere zum Abtrennen von Sauerstoff aus Luft, unter Verwendung von Druckwechseladsorbern, bei welchem das zu reinigende Gas unter Druck mit selektiv adsorbierenden Materialien in Kontakt gebracht und durch Entspannen und gegebenenfalls Anwendung von Saugdruck die adsorbierten Gase zur Regeneration der adsorbierenden Materialien desorbiert werden, sowie auf eine Vorrichtung zur Durchführung dieses Verfahrens.

Zur Herstellung von technischen Gasen, wie beispielsweise Sauerstoff, Stickstoff oder Argon, werden zumeist Tieftemperaturrektifikationsanlagen verwendet. Derartige Anlagen sind relativ aufwendig und teuer und müssen darüberhinaus in regelmäßigen Abständen zum Tauen abgestellt werden.

Neben den Tieftemperaturrektifikationsverfahren sind sogenannte Pressure-Swing-Verfahren bekannt. Derartige Verfahren verwenden Adsorptionsreaktoren, in welche das zu reinigende Gas unter Druck eingeleitet wird und wahlweise die gewünschte reine Komponente oder die Verunreinigungen an adsorbierendem Material festgehalten werden, worauf die Desorption der adsorbierten Stoffe durch Druckentlastung oder Saugdruck erfolgt. Als adsorbierende Materialien kommen sogenannte Molsiebe bzw. Molsiebgranulate zum Einsatz. Mittels der Druckwechseltechnik, wie sie beispielsweise der DE-OS 31 22 701 zu entnehmen ist, kann beispielsweise reiner Wasserstoff aus Kokereigasen abgetrennt werden.

Die Erfindung zielt nun darauf ab, ein Verfahren der eingangs genannten Art mit einer möglichst einfachen Anlage so zu führen, daß eine weitgehend kontinuierliche und eine weitgehend auf einem vorgegebenen Druckniveau gehaltene Abgabe eines gereinigten Gases möglich ist. Zur Lösung dieser Aufgabe besteht das erfindungsgemäße Verfahren im wesentlichen darin, daß eine Mehrzahl von Druckwechseladsorbern zyklisch mit zu reinigendem Gas beaufschlagt, zur Desorption entspannt, gegebenenfalls zur weiteren Desorbierung unter Unterdruck gesetzt und dem Druckaufbau auf Beladedruck unterzogen wird und daß die Zeiten für die Beladung, das Entspannen für das Regenerieren des adsorbierenden Materials und einen neuerlichen Druckaufbau auf den Beladedruck für die zyklische Durchführung des Verfahrens aneinander angeglichen, insbesondere gleich lang gewählt werden. Dadurch, daß eine Mehrzahl von Druckwechseladsorbern zyklisch mit zu reinigendem Gas beaufschlagt wird, kann in Übereinstimmung mit dem Verfahrensablauf jeweils einer der Druckwechseladsorber unmittelbar Produktgas in die Produktgasabzugsleitung liefern. In den jeweils anderen Druckwechseladsorbern werden die für den ordnungsgemäßen Betrieb des Adsorbers erforderlichen weiteren Verfahrensschritte zyklisch durchgeführt, wobei neben dem Beladen des Druckwechseladsorbers unter gleichzeitigem Abzug von gereinigtem Gas in der Folge die Reinigung des adsorbierenden Materials durch Entspannung gegen den atmosphärischen Druck vorgenommen werden kann und in einem weiteren Druckwechseladsorber eine weitergehende Regeneration des adsorbierenden Materials durch zumindest teilweises Evakuieren vorgenommen werden kann. Um das empfindliche adsorbierende Material von mechanischen Belastungen möglichst freizuhalten, erlaubt es die zyklische Verfahrensführung, den Druck in Druckwechseladsorber auf dasjenige Druckniveau wiederum anzuheben, bei welchem zu reinigendes Gas durch den Druckwechseladsorber hindurchgeführt wird, so daß eine schlagartige Druckänderung und damit eine übermäßige mechanische Belastung des Adsorbers sowie der adsorbierenden Materialien vermieden werden kann. Dadurch, daß die Zeiten für die einzelnen Verfahrensschritte aufeinander abgestimmt und aneinander angeglichen werden, ist ein zyklischer Betrieb möglich, bei welchem in jedem Adsorber abwechselnd einer der jeweils erforderlichen Verfahrensschritte für die ordnungsgemäße Durchführung des Druckwechselverfahrens abläuft. Mit Vorteil wird hiebei so vorgegangen, daß die Anzahl der Druckwechseladsorber gleich oder als ganzzahliges Vielfaches der Anzahl der hintereinander folgenden Verfahrensschritte, insbesondere als vier oder als ganzzahliges Vielfaches von vier gewählt wird. Auf diese Weise ist mit einfachen Steuereinrichtungen sowohl das Beaufschlagen der Druckwechseladsorber mit dem zu reinigenden Gas und das Entspannen als auch das Evakuieren der Druckwechseladsorber möglich. Die Steuerung des Verfahrens läßt sich dadurch noch weiter vereinfachen, daß der Wechsel von einem Verfahrensschritt zum nächsten in allen Druckwechseladsorbern im wesentlichen gleichzeitig vorgenommen wird.

Eine weitergehende Regeneration der adsorbierenden Materialien läßt sich dadurch erzielen, daß der langsame Druckaufbau auf den Beladedruck nach dem Entspannen oder der Anwendung eines Saugdruckes mit einer Teilmenge des Produktgases vorgenommen wird. Durch die Verwendung von Produktgas wird hiebei der Partialdruck der adsorbierten Komponente des Gases herabgesetzt und eine weitere Desorption erreicht.

Für die Herstellung von Sauerstoff als Produktgas wird mit Vorteil so vorgegangen, daß die adsorbierendes Material ein $N_2$ und unerwünschte Gaskomponente zurückhaltendes Molsiebmaterial, insbesondere Molsiebgranulat, eingesetzt wird.

Das erfindungsgemäße Verfahren wird hiebei so durchgeführt, daß die Druckwechselbehälter bzw. Druckwechseladsorber mit Prozeßluft unter 1 bis 20 bar, insbesondere 2 bis 5 bar, verdichteter Prozeßluft durchströmt werden, wobei Stickstoff, Kohlendioxyd, Feuchtigkeit und Kohlenwasserstoffe durch das Molekularsiebgranulat absorbiert werden. Die durchtretende Komponente ist somit relativ reiner Produktsauerstoff, wobei die Beladung naturgemäß nur so lange durchgeführt werden darf, solange ein Durchtreten der zu adsorbierenden Komponente nicht zu befürchten ist. Vor Erreichen der maximalen Kapazität der Beladung wird die Beladung unterbrochen und anschließend der Behälter entspannt. Gleichzeitig mit dieser Entspannung wird in einem zweiten Druckwechseladsorber eine Beladung durchgeführt. Durch die Entspannung im ersten Behälter sinkt der Partialdruck der adsorbierten Komponenten, insbesondere des Stickstoffes, und aufgrund dieses Absinkens des Partialdruckes ist das Molsiebgranulat nicht mehr in der Lage, die adsorbierten Komponenten, insbesondere den aufgenommenen Stickstoff, zurückzuhalten, wodurch eine teilweise Regeneratiion eintritt. Anschließend kann in einer dritten Verfahrensstufe ein weiteres Regenerieren durch Anwenden eines Saugdruckes mittels einer Vakuumpumpe erreicht werden. Mit dem Aufschalten eines Saugdruckes auf den ersten Behälter erfolgt gleichzeitig die Beendigung der Beladung im zweiten Behälter und der Beginn der Entspannung des zweiten Behälters, wohingegen die Beladung in einem dritten Behälter begonnen wird. Die Anwendung des Saugdruckes im ersten Behälter hat ein weiteres Absenken des Stickstoffpartialdruckes zur Folge, wodurch die gewünschte Desorption des Molekularsiebes erreicht wird.

Der erste Behälter befindet sich in diesem Stadium somit auf einem unteratmosphärischen Druck, der zweite Behälter befindet sich am Ende dieses Verfahrensschrittes auf Atmosphärendruck und der dritte Behälter, in welchem zu diesem Zeitpunkt eine Beladung vorgenommen wurde, befindet sich auf dem Druck der verdichteten Prozeßluft. Um nun den ersten Behälter wiederum für die neuerliche Beladung vorzubereiten und starke Druckschwankungen zu vermeiden, wird der erste Behälter auf Arbeitsdruck gebracht. Zu diesem Zweck wird der erste Behälter mit einer Teilmenge des Produktsauerstoffes beaufschlagt und kontinuierlich und möglichst langsam innerhalb der für diesen Verfahrensschritt zur Verfügung stehenden Zeit auf den Druck der verdichteten Prozeßluft gebracht. Durch die Verwendung des Produktsauerstoffes zum Aufbau dieses Druckes, wobei Produktsauerstoff entgegen der Strömungsrichtung bei der Adsorption eingebracht wird, wird neuerlich eine Stickstoffpartialdruckabsenkung beobachtet und zuletzt noch gebundener Stickstoff freigesetzt und gleichzeitig der Behälter mit Produktsauerstoff gefüllt. Am Ende dieses Druckaufbaues ist der Molsiebbehälter wiederum in der Lage, ohne mechanische Überbeanspruchung mit Druckluft beschickt zu werden, und es kann die zum Auffüllen des Druckwechseladsorbers verwendete Prozeßaurestoffmenge als Produkt wieder rückgewonnen werden. Die zyklischen Umschaltungen der einzelnen Verfahrensschritte auf die einzelnen Druckwechselbehälter können in Abhängigkeit von einer Zeituhr gesteuert werden, so daß eine besonders einfach Anlagenkonzeption die Folge ist.

Die erfindungsgemäße Vorrichtung zur Durchführung dieses Verfahrens ist im wesentlichen dadurch gekennzeichnet, daß eine Gaszuführungsleitung, eine Entspannungsleitung, gegebenenfalls eine Saugleitung, eine Produktsgasabzugsleitung und eine Druckaufbauleitung über jeweils ein Wege-bzw. Verteilerventil je Leitung mit einer Mehrzahl von Druckwechseladsorbern in Verbindung setzbar ist. Dadurch, daß jeweils ein Wege-bzw. Verteilerventil je Leitung vorgesehen ist, läßt sich eine besonders einfache Steuerung und Synchronisierung der einzelnen Umschaltvorgänge erzielen. Die Leitungen zu den einzelnen Behältern können möglichst kurz gehalten werden und es ist somit die in den Leitungen enthaltene Restgasmenge der einzelnen. Verfahrensstufen gleichfalls überaus gering.

In besonders vorteilhafter Weise sind die Wegeventile bzw. Verteilerventile als Kükenhähne oder Drehschieber ausgebildet. Eine derartige Ausbildung ermöglicht die Synchronisierung der Drehbewegung durch gemeinsamen Antrieb oder aber durch in Abhängigkeit von einem Schaltwerk, insbesondere einem Zeitschaltwerk, gesteuerte Stellmotoren. Eine besonders einfache Ausführungsform eines derartigen Drehschiebers besteht darin, daß die Drehschieber als Hähne ausgebildet und axial mit den Leitungen und über radiále Auslässe mit den Druckwechseladsorbern verbunden sind. Die Antriebe für die Wege-bzw. Verteilerventile können in einfacher Weise von elektrischen Stellmotoren gebildet sein, wobei die Antriebe der Wege-bzw. Steuerventile im wesentlichen gleichzeitig ansteuerbar oder die Wege-bzw. Steuerventile miteinander und einem gemeinsamen Antriebsmotor koppelbar sind, um eine vollständige Synchronisierung und gleichzeitige Umschaltung verschiedener Leitungen auf verschiedene Druckwechseladsorber zu ermöglichen.

Für die schonende Wiederherstellung des Prozeßgasdruckes, welcher beim Beladen dem jeweiligen Druckwechseladsorber zugeführt wird, unter gleichzeitiger Herstellung der maximalen Beladekapazität des adsorbierenden Materials ist die Ausbildung so getroffen, daß eine Zweigleitung der Produktgasleitung über ein Mengenregelventil mit einem zusätzlichen Wege-bzw. Verteilerventil verbunden ist, dessen Auslässe mit den einzelnen Druckwechseladsorbern in Verbindung stehen.

Um zu verhindern, daß ungereinigtes Produktgas abgezogen wird, was beispielsweise auf einen Defekt in einem Druckwechseladsorber oder ein Überschreiten der maximalen Beladekapazität zurückzuführen wäre, ist die Ausbildung mit Vorteil so getroffen, daß in die Produktgasleitung ein Analysengerät eingeschaltet ist und daß bei Überschreiten eines Konzentrationsgrenzwertes einer Komponente des zu gewinnenden Gases die Antriebe für die Wege-bzw. Verteilerventile ansteuerbar, insbesondere die Schaltintervalle für die Wege-bzw. Verteilerventile kontinuierlich veränderbar sind. Mit Vorteil kann die Ausbildung hiefür so getroffen sein, daß in die Produktgasleitung eine Mengenmeßstrecke eingeschaltet ist und daß nach dieser Produktmengenanzeige einerseits die Rohgaszuführung geregelt und anderseits die Schaltintervalle für die Wege-und Verteilerventile im wesentlichen proportional verändert werden.

Eine besonders einfache Ausbildung der Ventilanordnung ergibt sich durch die Verwendung von 4/4-Wegeventilen, wobei jedem Weg des Wegeventils ein Druckwechseladsorber zugeaschaltet ist und somit jeweils ein derartiges Ventil für jeden Druckwechseladsorber und jede Leitung vorgesehen ist. Die einfachste Art der zyklischen Verfahrensführung bei Zugrundelegen der Verfahrensschritte Beladen, Entspannen, Absaugen und - schonenden, kontinuierlichen, neuerlichen Druckaufbau läßt sich mit den genannten 4/4-Wegeventilen und vier Druckwechseladsorbern erzielen.

Für den schonenden Druckaufbau unter Verwendung einer Teilmenge des Produktgases ist die Ausbildung mit Vorteil so getroffen, daß die Mengenregelung für zum Druckaufbau rückgeführtes Produktgas in Abhängigkeit von der Zeit, welche für den Druckaufbau im Zyklus zur Verfügung steht, auf linearen Druckaufbau einstellbar ist.

Die Erfindung wird nachfolgend an Hand von in der Zeichnung dargestellten Ausführungsbeispielen näher erläutert. In dieser zeigen Fig. 1 eine - schematische Anlagenkonfiguration zur Durchführung des erfindungsgemäßen Verfahrens und Fig. 2 und Fig. 3 diagrammatische Darstellungen des Verfahrensablaufes mit einer Anlage nach Fig. 10.

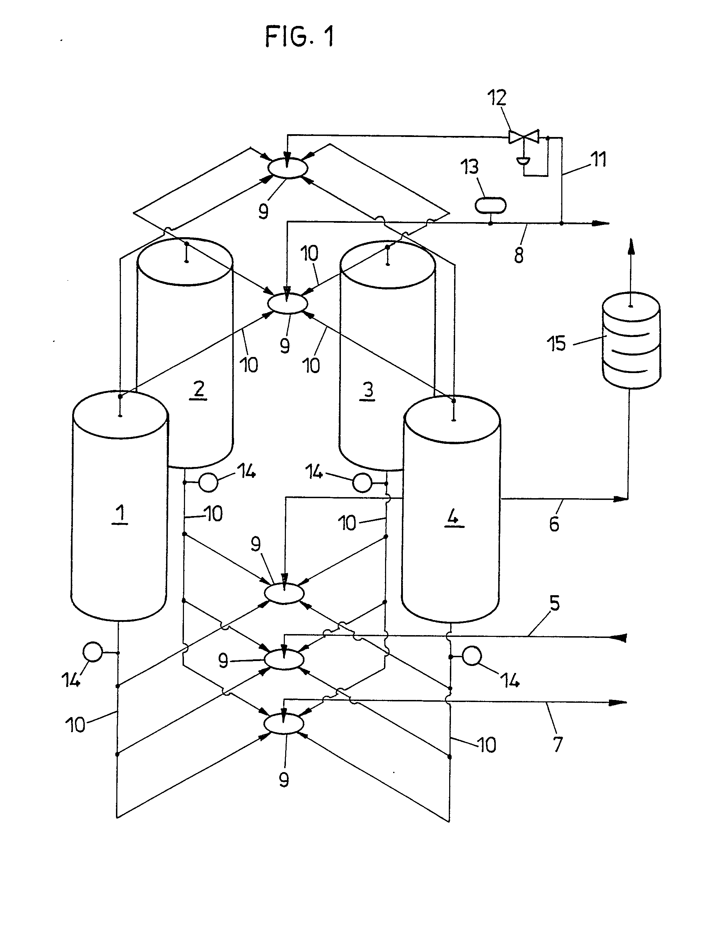

In Fig. 1 sind vier Druckwechseladsorber 1, 2, 3 und 4 vorgesehen. Jeweils eine gemeinsame Prozeßluftleitung 5, über welche die zu reinigende Prozeßluft unter einem Druck zwischen 1 und 20 bar, insbesondere 2 und 5 bar, zugeführt werden kann, sowie jeweils eine Entspannungsleitung 6, eine Saugleitung 7 und eine Produktgasleitung 8 sind über jeweils gesonderte Drehschieber 9 mit den Druckwechseladsorbern 1, 2, 3 und 4 in Verbindung bringbar. Die Drehschieber 9 sind gemeinsam, zumindest aber in ihrem Antrieb koppelbar, steuerbar und weisen jeweils eine axiale Zuführung für die genannten Leitungen 5, 6, 7 und 8 sowie radiale Auslässe für die Verbindungsleitungen 10 zu den Druckwechseladsorbern auf. Die Ausgangsposition der einzelnen Drehschieber ist jeweils so, daß mit dem Behälter 1 die Prozeßluftleitung 5, mit dem Behälter 4 die Entspannungsleitung 6, mit dem Behälter 3 die Saugleitung 7 und mit dem Behälter 2 eine Leitung zum kontinuierlichen Druckaufbau verbunden ist. Diese letztgenannte Leitung, welche mit 11 bezeichnet ist, stellt eine Zweigleitung der Produktgasleitung 8 dar, welche über eine Einrichtung 12 zur Regelung der Menge einem weiteren Drehschieber 9 zugeführt ist. Der Drehschieber 9 für die Produktgasabzugsleitung befindet sich in identischer Stellung wie der Prozeßluftzuführungsdrehschieber 9, so daß bei der in Fig. 1 dargestellten Stellung der Behälter 1 Prozeßluft zugeführt erhält und das gereinigte Produktgas, nämlich gereinigter Sauerstoff, über die Produktgasabzugsleitung 8 abgezogen wird. In diese Produktgasabzugsleitung 8 ist ein Analysengerät 13 eingeschaltet, welches die Reinheit des abgezogenen Sauerstoffes überwacht.

In die Zuleitungen zu den einzelnen Druckwechselbehältern 1, 2, 3 und 4 sind jeweils Druckmeßgeräte 14 eingeschaltet.

In die Entspannungsleitung ist ein Schalldämpfer 15 eingeschaltet, über welchen die entspannte Luft an die Atmosphäre abgegeben wird.

Nach Beendigung der Beladung des ersten Druckwechseladsorbers gemäß Fig. 1 werden alle Drehschieber um jeweils 90° verstellt, so daß das Verfahren zyklisch um jeweils eine Druckwechseladsorbereinheit verschoben weitergeführt wird und bis auf die kurze Schaltzeit, welche einem Bruchteil der Dauer einer derartigen Phase des Prozesses entspricht, weitgehend kontinuierlich reines Gas über die Prozeßgasleitung 8 abgezogen werden kann.

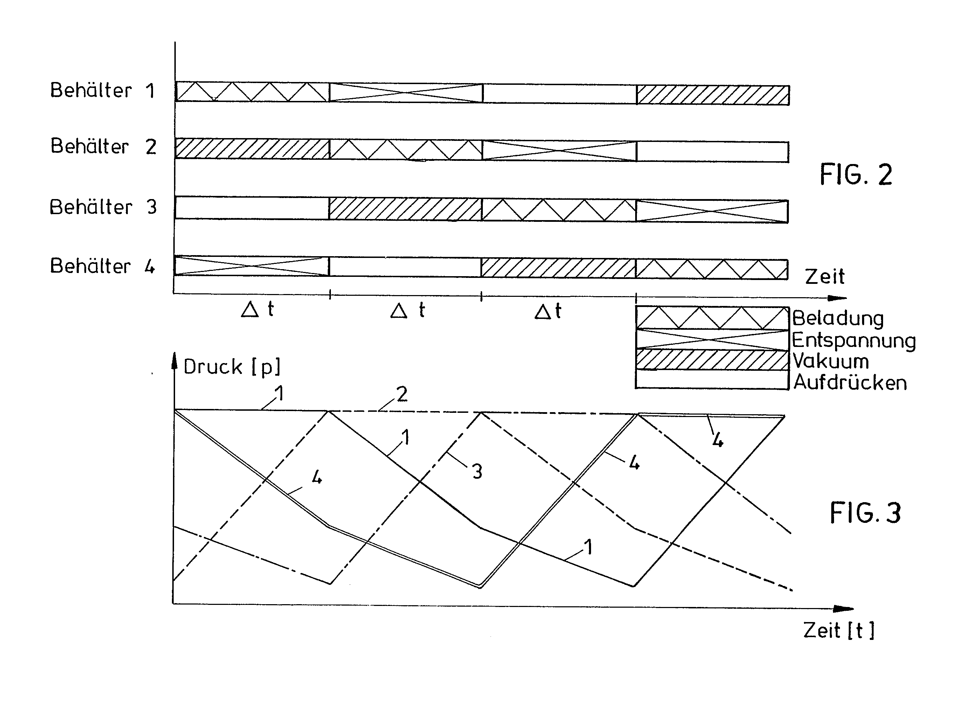

Die Verhältnisse bei der Verfahrensdurchführung werden am deutlichsten an Hand der Fig. 2 und 3 erläutert. In Fig. 2 sind die einzelnen Phasen des Prozesses in den Druckwechseladsorbern 1, 2, 3 und 4 über die Zeit eines vollständigen vierstufigen Zyklus dargestellt. Im Behälter 1 erfolgt hiebei zunächst ein Beladen, wohingegen zur gleichen Zeit im Behälter 2 ein Druckaufbau auf den Druck der Prozeßluft durch Rückführung von Produktgas, nämlich gereinigtem Sauerstoff, erfolgt. Im dritten Druckwechselbehälter erfolgt gleichzeitig ein Evakuieren zur Vervollständigung der Regeneration, wohingegen im vierten Druckwechselbehälter eine Entspannung auf atmosphärischen Druck vorgenommen wird. Nach dem Umschalten der Drehschieber wird der zweite Druckwechselbehälter beladen, wohingegen der erste Druckwechselbehälter entspannt, der dritte Druckwechselbehälter mit Produktgas auf Prozeßdruck gebracht wird und der vierte Druckwechselbehälter evakuiert wird. Nach neuerlichem Umschalten und Ablauf eines identischen Zeitintervalles Δ t erfolgt im ersten Behälter ein Evakuieren, im zweiten Behälter eine Entspannung, im dritten Behälter ein Beladen und im vierten Behälter ein Auffüllen mit Produktgas auf Prozeßgasdruck. Schließlich erfolgt nach wiederum identischem Zeitintervalle Δt eine neuerliche Umschaltung, wobei der erste Behälter für die neuerlich Beladung durch Auffüllen mit Produktgas auf den Prozeßgasdruck wieder gefüllt wird, der zweite Behälter evakuiert wird, der dritte Behäälter gegen atmosphärische Luft entspannt wird und gleichzeitig der vierte Behälter zu diesem Zeitpunkt beladen wird. Die zugehörigen Druckverhältnisse zu den einzelnen Behältern sind in den Druckkurven der Fig.3 ersichtlich, in welcher 1 den Druckverlauf im ersten Behälter, 2 den Druckverlauf im zweiten Behälter, 3 den Druckverlauf im dritten Behälter und 4 den Druckverlauf im vierten Druckbehälter bezeichnet.

**Ansprüche**

1. Verfahren zum Reinigen von Gasen, insbesondere zum Abtrennen von Sauerstoff aus Luft, unter Verwendung von Druckwechseladsorbern, bei welchem das zu reinigende Gas unter Druck mit selektiv adsorbierenden Materialien in Kontakt gebracht und durch Entspannen und gegebenenfalls Anwendung von Saugdruck die adsorbierten Gase zur Regeneration der adsorbierenden Materialien desorbiert werden, dadurch gekennzeichnet, daß eine Mehrzahl von Druckwechseladsorbern zyklisch mit zu reinigendem Gas beaufschlagt, zur Desorption entspannt, gegebenenfalls zur weiteren Desorbierung unter Unterdruck gesetzt und dem Druckaufbau auf Beladedruck unterzogen wird und daß die Zeiten für die Beladung, das Entspannen und gegebenenfalls die Anwendung von Saugdruck zur Desorption für das Regenerieren des adsorbierenden Materials und einen neuerlichen Druckaufbau auf den Beladedruck für die zyklische Durchführung des Verfahrens aneinander angeglichen, insbesondere gleich lang gewählt werden.

2. Verfahren nach Anspruch 1, dadurch gekennzeichnet, daß die Anzahl der Druckwechseladsorber gleich oder als ganzzahliges Vielfaches der Anzahl der hintereinanderfolgenden Verfahrensschritte, insbesondere als vier oder als ganzzahliges Vielfaches von vier gewählt wird.

3. Verfahren nach Anspruch 1 oder 2, dadurch gekennzeichnet, daß der Wechsel von einem Verfahrensschritt zum nächsten in allen Druckwechseladsorbern im wesentlichen gleichzeitig vorgenommen wird.

4. Verfahren nach Anspruch 1, 2 oder 3, dadurch gekennzeichnet, daß der Druckaufbau auf den Beladedruck nach dem Entspannen oder der Anwendung von Saugdruck mit einer Teilmenge des Produktgases vorgenommen wird.

5. Verfahren nach einem der Ansprüche 1 bis 4, dadurch gekennzeichnet, das als adsorbierendes Material für die Herstellung von reinem Sauerstoff als Produktgas ein $N_2$ und unerwünschte Gaskomponenten zurückhaltendes Molsiebgranulat eingesetzt wird.

6. Vorrichtung zur Durchführung des Verfahrens nach einem der Ansprüche 1 bis 5, dadurch gekennzeichnet, daß eine Gaszuführungsleitung, eine Entspannungsleitung, gegebenenfalls eine Saugleitung, eine Produktgasabzugsleitung und eine Druckaufbauleitung über jeweils ein Wege- bzw. Verteilerventil je Leitung mit einer Mehrzahl von Druckwechseladsorbern in Verbindung setzbar ist.

7. Vorrichtung nach Anspruch 6, dadurch gekennzeichnet, daß die Wegeventile bzw. Verteilerventile als Kükenhähne oder Drehschieber ausgebildet sind.

8. Vorrichtung nach Anspruch 7, dadurch gekennzeichnet, daß die Drehschieber als Hähne axial mit den Leitungen und über radiale Auslässe mit den Druckwechseladsorbern verbunden sind.

9. Vorrichtung nach Anspruch 6, 7 oder 8, dadurch gekennzeichnet, daß die Wege- bzw. Verteilerventile mit im wesentlichen gleichzeitig ansteuerbaren Antrieben, insbesondere elektrischen Stellmotoren, verbunden sind oder daß die Wege- bzw. Verteilerventile miteinander und einem gemeinsamen Antriebsmotor koppelbar sind.

10. Vorrichtung nach einem der Ansprüche 6 bis 9, dadurch gekennzeichnet, daß eine Zweigleitung der Produktgasleitung über ein Mengenregelventil mit einem zusätzlich Wege-bzw. Verteilerventil verbunden ist, dessen Auslässe mit den einzelnen Druckwechseladsorbern in Verbindung stehen.

11. Vorrichtung nach einem der Ansprüche 6 bis 10, dadurch gekennzeichnet, daß in die Produktgasleitung ein Analysengerät eingeschaltet ist und daß bei Überschreiten eines Konzentrationsgrenzwertes einer Komponente des zu gewinnenden Gases die Antriebe für die Wege-bzw. Verteilerventile ansteuerbar, insbesondere die Schaltintervalle für die Wege-bzw. Verteilerventile kontinuierlich veränderbar sind.

12. Vorrichtung nach einem der Ansprüche 6 bis 10, dadurch gekennzeichnet, daß in die Produktgasleitung eine Mengenmeßstrecke eingeschaltet ist, und daß nach dieser Produktmengenanzeige einerseits die Rohgaszuführung geregelt und anderseits die Schaltintervalle für die Wege- und Verteilerventile im wesentlichen proportional verändert werden.

13. Vorrichtung nach einem der Ansprüche 6 bis 12, dadurch gekennzeichnet, daß 4/4-Wegeventile und vier Druckwechseladsorber vorgesehen sind.

14. Vorrichtung nach einem der Ansprüche 6 bis 13, dadurch gekennzeichnet, daß die Mengenregelung für zum Druckaufbau rückgeführtes Produktgas in Abhängigkeit von der Zeit, welche für den Druckaufbau im Zyklus zur Verfügung steht, auf linearen Druckaufbau einstellbar ist.

# FIG. 1

FIG. 2

Behälter 1
Behälter 2
Behälter 3
Behälter 4

Zeit

Δt   Δt   Δt

Beladung
Entspannung
Vakuum
Aufdrücken

FIG. 3

Druck [p]

Zeit [t]

# EUROPÄISCHER RECHERCHENBERICHT

**Europäisches Patentamt**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | DE-A-2 221 379 (L'AIR LIQUIDE S.A.) * Ansprüche 1,6,12; Figuren 6,7; Seite 19, Zeile 3 – Seite 21, Zeile 3; Seite 12, Zeile 20 – Seite 13, Zeile 3 * | 1-6,11 ,14 | B 01 D 53/04 |
| | --- | | |
| A | EP-A-0 129 304 (NORMALAIR-GARRETT) * Ansprüche 1-3 * | 1 | |
| | --- | | |
| A | DE-A-2 025 205 (R.W. GRÄFF) * Ansprüche 1,3 * | 1,7,9 | |
| | ----- | | |

| RECHERCHIERTE SACHGEBIETE (Int. Cl.4) |
|---|
| B 01 D 53/00 |

Der vorliegende Recherchenbericht wurde für alle Patentansprüche erstellt.

| Recherchenort | Abschlußdatum der Recherche | Prüfer |
|---|---|---|
| BERLIN | 23-01-1987 | BERTRAM H E H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82